# EUROPÄISCHE PATENTSCHRIFT

(11) **EP 1 163 807 B1**
(45) Veröffentlichungstag und Bekanntmachung des Hinweises auf die Patenterteilung: **18.05.2005**
(21) Anmeldenummer: 00930978.2
(22) Anmeldetag: 17.03.2000
(51) Int. Cl.: H04Q 3/00, H04L 12/24, H04L 29/06

(54) **VERFAHREN ZUR PRÜFUNG DER AUTHENTITÄT EINER MANAGER APPLIKATION IN EINEM TELEKOMMUNIKATIONS MANAGEMENT NETZ BEDIENSYSTEM DURCH EIN NETZELEMENT SOWIE EIN DAFÜR GEEIGNETES NETZELEMENT**
METHOD FOR VERIFYING THE AUTHENTICATION OF A MANAGER APPLICATION IN A TELECOMMUNICATIONS MANAGEMENT NETWORK OPERATING SYSTEM BY MEANS OF A NETWORK ELEMENT AND NETWORK ELEMENT SUITABLE THEREFOR
PROCEDE PERMETTANT DE VERIFIER L'AUTHENTIFICATION D'UNE APPLICATION DE GESTION D'UN SYSTEME DE COMMANDE DE RESEAU DE GESTION DES TELECOMMUNICATIONS PAR UN ELEMENT RESEAU ET ELEMENT RESEAU ADAPTE

(30) Priorität: 19.03.1999 DE 19912520
(43) Veröffentlichungstag der Anmeldung: 19.12.2001
(73) Patentinhaber: SIEMENS AKTIENGESELLSCHAFT, 80333 München (DE)
(72) Erfinder: DEININGER, Andreas, D-86938 Schondorf (DE); MUELLER, Klaus-Dieter, D-81477 München (DE); HAAS, Egon, A-1030 Wien (AT)
(86) Internationale Anmeldenummer: PCT/DE2000/000827
(87) Internationale Veröffentlichungsnummer: WO 2000/057597

(56) Entgegenhaltungen:
- US-A- 5 696 697
- GEYMONAT M ET AL: "TMN X-INTERFACE STUDIES AND EXPERIMENTS FOR ATM" IEEE NETWORK OPERATIONS AND MANAGEMENT SYMPOSIUM,US,NEW YORK, NY: IEEE, Bd. CONF. 10, 15. Februar 1998 (1998-02-15), Seiten 364-373, XP000799506 ISBN: 0-7803-4352-2
- MAILLOT D ET AL: "SECURITY AND INTEGRITY REQUIREMENT ACROSS INTER-DOMAIN MANAGEMENT" NL,AMSTERDAM, IOS, 1. Oktober 1996 (1996-10-01), Seiten 478-492, XP000754594 ISBN: 90-5199-290-4

## Beschreibung

Die vorliegende Erfindung bezieht sich auf ein Verfahren zur Prüfung der Authentität einer Manager Applikation in einem Telekommunikations Management Netz Bediensystem (TMN-OS) gemäß dem Oberbegriff des Verfahrensanspruchs 1 und auf ein zugehöriges Netzelement gemäß dem Oberbegriff des Vorrichtungsanspruchs 5.

Vermittlungseinrichtungen, sog. Netzelemente, dienen als Knoten in einem Telekommunikationsnetz dazu, den Informationsfluß in solchen Netzen zu koordinieren. Die Netzelemente werden von einem speziellen Bediensystem, dem TMN-OS verwaltet. Zu diesem Zweck sind sie zusammen mit dem Bediensystem an ein spezielles Verwaltungsnetz, das sog. Telekommunikations Management Netz (TMN) angeschlossen; die Verwaltung der Netzelemente erfolgt durch Kommunikation des Bediensystems TMN-OS mit den Netzelementen über das TMN.

Das TMN-OS ist aus einer Vielzahl von Manager Applikationen aufgebaut, denen in jedem Netzelement jeweils ein Gegenpart, eine sog. Agent Applikation, zugeordnet ist.

Die Kommunikation zwischen einer Manager Applikation in dem TMN-OS und ihrer zugehörigen Agent Applikation in dem Netzelement erfolgt für jede Manager Applikation/Agent Applikation-Paarung gemäß einem fest definierten Kommunikationsprotokoll. Dabei wird zwischen "Veröffentlichten" und "Nicht-Veröffentlichten" Protokollen unterschieden. Veröffentlichte, sogenannte "Offene" Protokolle sind z.B. das FTAM-, das FTPund das Q3-Protokoll. Im Gegensatz dazu ist z.B. das MML Protokoll, das "proprietär", also herstellerspezifisch definiert ist, nicht veröffentlicht.

Zu Beginn oder während der Abwicklung eines Kommunikationsprotokolles kann eine Prüfung der Authentität einer Manager Applikation durch ein Netzelement vorgesehen sein. Dazu muß sich die Manager Applikation, die eine Verbindung zu dem Netzelement aufzubauen wünscht, als diejenige ausweisen, die sie vorgibt zu sein.

Die Authentisierungsprüfung erfolgt in der Weise, daß die Manager Applikation kommunikationsprotokollspezifische Authentisierungsdaten über das TMN an das Netzelement überträgt, woraufhin das Netzelement die empfangenen Authentisierungsdaten mit vorbestimmten gespeicherten Authentisierungsdaten vergleicht.

Die Authentisierungsprüfung gestaltet sich insofern sehr kompliziert, da jedes Kommunikationsprotokoll nicht nur eine eigene Authentisierungsprüfung, sondern auch individuelle protokollspezifische Authentisierungsdaten besitzt. Als Authentitätsdaten dienen verschiedene Arten von Initiatoren und andere Daten. Zu den Initiatoren zählen z. B. Human-User, User Ids sowie Applikationen, die durch einen Application Entity Title (AET) gekennzeichnet sind. Andere Daten sind: Paßwörter, Schlüssel, Replay Protected Paßwörter, Randoms (Zufallszahlen), Datum und Uhrzeit etc.

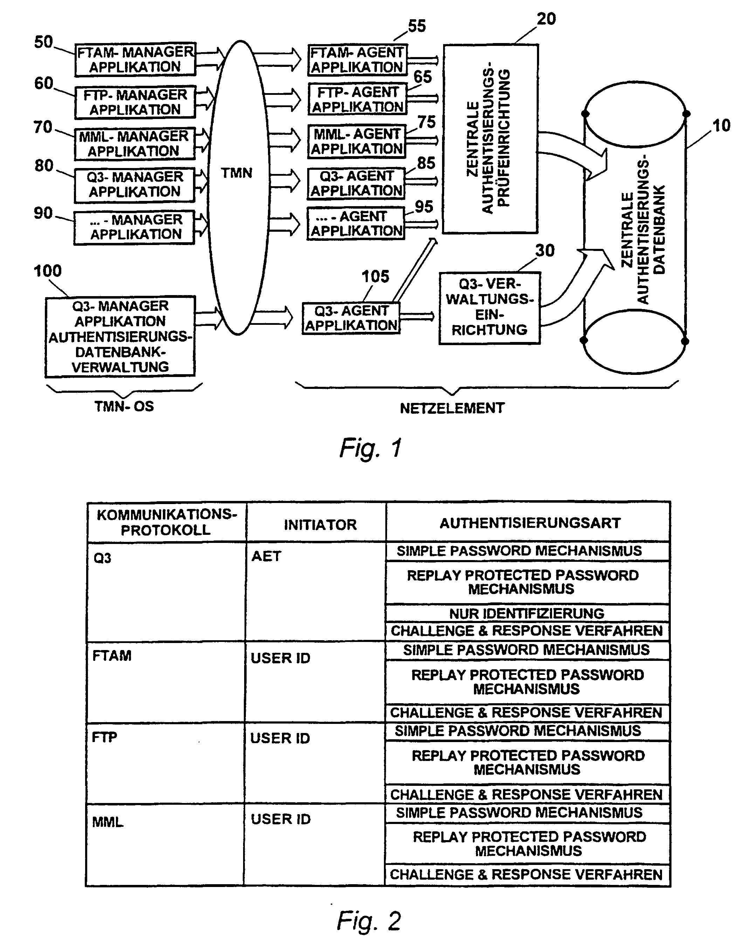

Neben diesen unterschiedlichen protokollspezifischen Authentisierungsdaten stehen gemäß Fig. 2 für jedes Kommunikationsprotokoll i.d.R. mehrere Prüfmechanismen, sog. Authentisierungsarten, zur Durchführung der Authentisierungsprüfung zur Verfügung; gemäß Fig. 2 sind dies für das Kommunikationsprotokoll Q3 beispielsweise ein Simple Paßwort Mechanismus, ein Replay Protected Paßwort Mechanismus, eine reine "Identifizierung" oder ein Challenge & Response Verfahren.

Dies hat zur Folge, daß vor jeder Authentisierungsprüfung eine der jeweils zur Verfügung stehenden Authentisierungsarten zur Durchführung der anstehenden Authentisierungsprüfung ausgewählt werden muß. Die Druckschrift D. Maillot et al.: "security and Integrity Requirement across Inter-Domain Management", IEEE Network Operations and Management Symposium, US, New York, NY: IEEE, BA. Conf. 10, 15. Februar 1998, Seiten 364-373 offenbart hierzu ein gemeinsames Interface für verschiedene TMMs, das auch Sicherheitsrichtlinien beinhaltet.

Herkömmlicherweise existieren deshalb für jedes Kommunikationsprotokoll unterschiedliche Softwareprogramme, sog. protokollspezifische Applikationen, mit teilweise sogar unterschiedlichen Bedieneroberflächen (MML, Q3) für die Verwaltung der Authentisierungsdaten und der Authentisierungsarten.

Es ist die Aufgabe der Erfindung, ein gegenüber dem herkömmlichen vereinfachtes Verfahren zur Prüfung der Authentität einer Manager Applikation durch ein Verfahren sowie ein dafür geeignetes Netzelement bereit zu stellen, bei denen die unterschiedlichen protokollspezifischen Applikationen zur Verwaltung der Authentisierungsdaten entbehrlich sind.

Diese Aufgabe wird durch die in den Patentansprüchen 1 und 5 beanspruchten Gegenstände gelöst. Weitere vorteilhafte Ausgestaltungen der Erfindung sind Gegenstand der Unteransprüche.

Gemäß den Patentansprüchen 1 und 5 wird die Aufgabe insbesondere dadurch gelöst, daß die Authentisierungsprüfung in dem Netzelement für verschiedene Manager Applikationen, das heißt für verschiedene Kommunikationsprotokolle, zentral in einer Authentisierungssprüfeinrichtung erfolgt, und daß die Authentisierungssprüfeinrichtung auf eine Authentisierungsdatenbank zugreift, in der die unterschiedlichen Authentisierungsdaten für alle verwendeten Kommunikationsprotokolle zentral hinterlegt sind.

Das erfindungsgemäße Verfahren sowie das dazugehörige Netzelement bieten den Vorteil, daß die Authentisierungsprüfung zentral und einheitlich für alle Kommunikationsprotokolle durchgeführt werden kann. Die Durchführung kommunikationsprotokollspezifischer Authentisierungsprüfungen wird damit entbehrlich.

Weiterhin wird durch die zentrale Authentisierungsdatenbank die Verwaltung der unterschiedlichen Authentisierungsdaten erheblich vereinfacht und verbilligt. Unterschiedliche Applikationen zur Verwaltung der kommunikationsprotokollspezifischen Authentisierungsdaten werden ebenfalls entbehrlich.

Außerdem lassen sich die zentrale Authentitätsprüfeinrichtung sowie die zentrale Authentisierungsdatenbank einfach ändern oder erweitern, wenn andere oder zusätzliche Kommunikationsprotokolle eingesetzt werden.

Gemäß einer vorteilhaften Ausgestaltung des Verfahrens wird die zentrale Authentisierungsdatenbank durch ein eigenes Kommunikationsprotokoll verwaltet. Auf diese Weise wird die Verwaltung der unterschiedlichen Authentisierungsdaten der verschiedenen Kommunikationsprotokolle vereinheitlicht, in dem z. B. eine einheitliche Bedieneroberfläche (MML, Q3) für die Verwaltung der unterschiedlichen Authentisierungsdaten realisiert wird.

Es ist von Vorteil, wenn für die Kommunikation zwischen den Manager Applikationen in dem TMN-OS und den Agent Applikationen in dem Netzelement verschiedene Kommunikationsprotokolle für den Austausch unterschiedlicher Informationen zur Verfügung stehen.

In einer bevorzugten Weiterbildung des erfindungsgemäßen Prüfungsverfahrens wird der Schritt der Authentisierungsprüfung nicht nur für jedes einzelnen Kommunikationsprotokoll, sondern auch für unterschiedliche Authentisierungsarten zentral in dem Netzelement durchgeführt. Auch diese Zentralisierung erspart kostenaufwendige kommunikationsprotokollspezifische Einzellösungen.

Schließlich ist es bei dem zur Durchführung des Verfahrens ausgebildeten Netzelement von Vorteil, wenn die zentrale Authentisierungsdatenbank von einer Verwaltungseinrichtung verwaltet wird, die über eine eigene netzelementinterne Agent Applikation von dem TMN-OS gesteuert wird. Neben der Einsparung von kommunikationsprotokollspezifischen Einzellösungen zur Verwaltung der kommunikationsprotokollspezifischen Authentisierungsdaten ermöglicht diese Weiterbildung außerdem eine Entkopplung von telekommunikationsspezifischer und verwaltungstechnischer Kommunikation zwischen dem TMN-OS und dem Netzelement.

Es erfolgt eine detaillierte Beschreibung eines bevorzugten Ausführungsbeispiels der Erfindung unter Bezugnahme auf die beigefügten Figuren.
Fig. 1 zeigt ein TMN als Verbindungsnetz zwischen einem TMN-OS und einem Netzelement gemäß der vorliegenden Erfindung; und
Fig. 2 zeigt eine tabellarische Zuordnung von Kommunikationsprotokollen und jeweils möglichen Authentisierungsarten.

Ein Netzelement in einem Kommunikationsnetz wird durch ein Telekommunikations Management Netz Bediensystem (TMN-OS) verwaltet. Fig. 1 zeigt die zu diesem Zweck erforderliche Ankopplung des Netzelementes an das TMN-OS über ein TMN. Das TMN-OS weist eine Vielzahl von Manager Applikationen 50, 60...100 auf, die entweder in Hardware, üblicherweise jedoch in Software realisiert werden. Ein oder mehrere dieser Manager Applikationen können dann auf einem Rechner ablaufen.

Das Netzelement weist zu jeder Manager Applikation in dem TMN-OS jeweils einen entsprechenden Gegenpart, eine sog. Agent Applikation 55, 65...105, auf. Über diese Agent Applikationen kommuniziert das Netzelement über das TMN mit den Manager Applikationen 50, 60...100 des TMN-OS. Jede Manager Applikation kommuniziert mit ihrer zugehörigen Agent Applikation in Form eines individuellen Kommunikationsprotokolls. Dabei sind gemäß Fig. 1 folgende Konstellationen möglich:
Die File Transfer Access Management (FTAM)-Manager Applikation 50 kommuniziert mit der FTAM-Agent Applikation 55;
die File Transfer Protocol (FTP)-Manager Applikation 60 kommuniziert mit der FTP-Agent Applikation 65;
die Man Machine Language (MML)-Manager Applikation 70 kommuniziert mit der MML-Agent-Applikation 75; und
die Q3-Manager Applikationen 80, 100 kommunizieren mit den Q3-Agent Applikationen 85, 105 in dem Netzelement.

Es wird eine unilaterale Authentisierungsprüfung betrachtet, bei der das Netzelement vor einem Verbindungsaufbau zu dem TMN-OS überprüft, ob die Manager Applikation, die eine Verbindung aufzubauen wünscht, diejenige ist, die sie vorgibt zu sein. Die Authentisierungsprüfung kann nicht nur vor, sondern auch während der Abwicklung eines Kommunikationsprotokolls, dann als eine sog. Re-Authentisierung, durchgeführt werden.

Im Rahmen der in Fig. 1 gezeigten unilateralen Authentisierungsprüfung baut eine Manager Applikation 50, 60...100, die eine Verbindung zu dem Netzelement aufbauen möchte, zunächst in Abhängigkeit ihres Kommunikationsprotokolles, ihrer Initiatoren und einer ausgewählten Authentisierungsart die für die Durchführung der Authentisierungsprüfung notwendigen Protokollanteile auf und sendet diese an das Netzelement. Von dem Netzelement werden diese Protokollanteile empfangen und ausgewertet. Bei der Auswertung werden insbesondere die für die Durchführung der Authentisierungsprüfung notwendigen Authentisierungsdaten aus den Protokollanteilen herausgefiltert.

Jedes der verwendeten Kommunikationsprotokolle, z. B. das FTAM-, das FTP-, das MML- oder das Q3-Kommunikationsprotokoll, besitzt jeweils eigene Authentisierungsdaten.

Als Authentisierungsdaten dienen verschiedene Arten von Initiatoren und andere Daten. Zu den Initiatoren zählen z. B. Human-User, User Ids sowie Applikationen, die durch einen Application Entity Title (AET) gekennzeichnet sind. Andere Daten sind: Paßwörter, Schlüssel, Replay Protected Paßwörter, Randoms (Zufallszahlen), Datum oder Uhrzeit etc.

The von den Agent Applikationen 55, 65...105 selektierten Authentisierungsdaten werden innerhalb des Netzelementes an eine zentrale Authentisierungsprüfeinrichtung 20 weitergeleitet, wo sie zur Durchführung der eigentlichen Authentisierungsprüfung dienen.

Für jede Manager Applikation bzw. für jedes Kommunikationsprotokoll stehen gemäß Fig. 2 mehrere Mechanismen, sog. Authentisierungsarten, für die Durchführung einer Authentisierungsprüfung zur Verfügung. Für jede Authentisierungsprüfung wird im Einzelfall eine der möglichen Authentisierungsarten ausgewählt und vorbestimmt.

Die Authentisierungsprüfung erfolgt in der Weise, daß die zentrale Authentisierungsprüfeinrichtung 20 überprüft, ob die von der Manager Applikation gewünschte Authentisierungsart für das Kommunikationsprotokoll bzw. für den Initiator gültig ist, und ob die empfangenen protokollspezifischen Authentisierungsdaten mit den vorab in einer zentralen Authentisierungsdatenbank 10 hinterlegten originalen Authentisierungsdaten übereinstimmen. Im Falle einer Übereinstimmung stellt die zentrale Authentisierungsprüfeinrichtung fest, daß die anfragende Manager Applikation für einen beantragten Verbindungsaufbau berechtigt ist. Dazu folgendes Beispiel:

Im Vorfeld zukünftiger Kommunikationen zwischen dem TMN-OS und dem Netzelement werden zunächst Authentisierungsdaten für ein zu verwendendes Protokoll in der zentralen Authentisierungsdatenbank 10 hinterlegt. Dies erfolgt in der Weise, daß eine Q3-Manager Applikation eine Q3-Verwaltungseinrichtung 30 innerhalb des Netzelementes beauftragt, in die zentrale Authentisierungsdatenbank 10 z. B. für zukünftige Kommunikationen mit dem FTAM-Protokoll den Initiator "HUGO" einzutragen, sowie daß dieser zur Authentisierung die Authentisierungsart "Simple Paßwort Mechanismus" benutzen muß und daß sein Kennwort "ABCD1#" ist.

Vor jedem nachfolgenden Verbindungsaufbau mit einem FTAM-Kommunikationsprotokoll führt dann die zentrale Authentisierungsprüfeinrichtung 20 im Netzelement die Authentisierungsprüfung wie folgt durch:

Von der FTAM-Agent Applikation 55 im Netzelement erhält sie die Information, daß die FTAM-Manager Applikation 50 eine Verbindung aufbauen möchte, wobei sich die Manager Applikation als Initiator "HUGO" der beantragten Verbindung ausgibt und behauptet, daß ihr Kennwort "ABCD1#" laute. Die zentrale Authentisierungsprüfeinrichtung 20 vergleicht daraufhin diese Daten mit den zuvor in der zentralen Authentisierungsdatenbank 10 hinterlegten originalen Authentisierungsdaten für das FTAM-Kommunikationsprotokoll und den Initiator "HUGO" und gibt im Falle einer Übereinstimmung den Verbindungsaufbau frei.

Am Ende einer Authentisierungsprüfung wird der Manager Applikation von ihrer zugehörigen Agent Applikation das Ergebnis ihrer Überprüfung zusammen mit den daraus resultierenden Konsequenzen für den Verbindungsaufbau mitgeteilt. Als mögliche Konsequenzen aus dem Ergebnis kommen folgende Entscheidungen in Frage: der beantragte Verbindungsaufbau erfolgt, der beantragte Verbindungsaufbau wird abgewiesen oder ein angefangener Verbindungsaufbau wird abgebrochen.

Die zentrale Authentisierungsprüfeinrichtung 20 führt die beispielhaft für das FTAM-Kommunikationsprotokoll beschriebene Authentisierungsprüfung in gleicher Weise für alle anderen verwendeten Kommunikationsprotokolle durch. Sie greift dabei in jedem Einzelfall auf die zentrale Authentisierungsdatenbank 10 zu, in der die Authentisierungsdaten für alle Kommunikationsprotokolle hinterlegt sind.

Wie in Fig. 1 zu erkennen, wird die zentrale Authentisierungsdatenbank 10 von einer eigenen Q3-Manager Applikation 100 in dem TMN-OS verwaltet. Dabei läuft die Kommunikation der Q3-Manager Applikation 100 mit dem Netzelement ebenfalls über das TMN und eine zugehörige Q3-Agent Applikation 105. In dem Netzelement steuert die Q3-Agent Applikation 105 die Q3-Verwaltungseinrichtung 30, welche unmittelbar die zentrale Authentisierungsdatenbank 10 verwaltet. Typische Administrationsbefehle, die die Q3-Verwaltungseinrichtung 30 von der Q3-Manager Applikation 100 bzw. von ihrer zugehörigen Q3-Agent Applikation 105 erhält, sind z. B. das Eintragen, das Ändern oder das Löschen von Daten in der zentralen Authentisierungsdatenbank 10.

Neben der bisher diskutierten unilateralen Authentisierungsprüfung besteht grundsätzlich auch die Möglichkeit einer mutualen (oder gegenseitigen) Authentisierungsprüfung, die neben der beschriebenen unilateralen Authentisierungsprüfung auch die Prüfung der Authentität eines Netzelementes bzw. der Agent Application durch eine Manager Applikation vorsieht. Dabei muß sich die Agent Applikation, welche eine Kommunikation zu dem Bediensystem, bzw. zu einer Manager Applikation in dem Bediensystem aufzubauen wünscht, der Manager Applikation gegenüber als diejenige Agent Applikation ausweisen, welche sie vorgibt zu sein.

## Patentansprüche

1. Verfahren zur Prüfung der Authentität einer Manager Applikation (50...100) in einem Telekommunikations Management Netz Bediensystem TMN-OS durch ein Netzelement, welches durch das TMN-OS über ein zwischengeschaltetes TMN verwaltet wird, mit folgenden Schritten:
Übertragen von kommunikationsprotokollspezifischen Authentisierungsdaten von einer Manager Applikation (50, 60...100) über das TMN an das Netzelement im Rahmen der Abwicklung eines Kommunikationsprotokolls, wobei die protokollspezifischen Authentisierungsdaten für die Prüfung der Authentität der Manager Applikation (50, 60...100) durch das Netzelement erforderlich sind; und
Überprüfen der Authentität der Manager Applikation durch Vergleichen der empfangenen protokollspezifischen Authentisierungsdaten mit vorbestimmten, gespeicherten Authentisierungsdaten;
**dadurch gekennzeichnet, daß**
der Schritt der Authentisierungsprüfung zentral in einer Authentitätsprüfeinrichtung (20) für verschiedene Kommunikationsprotokolle erfolgt; und daß
in einer Authentisierungsdatenbank (10) Authentisierungsdaten für alle verwendeten Kommunikationsprotokolle zentral hinterlegt sind.

2. Verfahren nach Anspruch 1, weiterhin **gekennzeichnet durch** folgenden Schritt:
Verwalten der zentralen Authentisierungsdatenbank (10) **durch** ein eigenes Kommunikationsprotokoll.

3. Verfahren nach Anspruch 1 oder 2, **dadurch gekennzeichnet, daß** das die Kommunikationsprotokolle ein Q3-, ein FTAM-, ein FTP- oder ein MML-Protokoll sind.

4. Verfahren nach einem der Ansprüche 1 bis 3, **dadurch gekennzeichnet, daß** der Schritt der Authentisierungsprüfung für jedes einzelne Kommunikationsprotokoll mit unterschiedlichen Authentisierungsarten zentral in der Authentitätsprüfeinrichtung (20) erfolgt.

5. Netzelement in einem Telekommunikationsnetz, wobei das Netzelement durch ein Telekommunikations Management Netz Bediensystem TMN-OS über ein Telekommunikations Management Netz TMN verwaltet wird, mit:
wenigstens einer Agent Applikation (55, 65...105) zum Empfangen von kommunikationsprotokollspezifischen Authentisierungsdaten über das TMN von einer zugehörigen Manager Applikation (50, 60...100) in dem TMN-OS, wobei die Authentisierungsdaten für die Prüfung der Authentität der zugehörigen Manager Applikation erforderlich sind; und
einer Authentitätsprüfeinrichtung (20), zum Empfangen der protokollspezifischen Authentisierungsdaten von der Agent Applikation und zum Prüfen der Authentität der Manager Applikation, durch Vergleichen der protokollspezifischen Authentisierungsdaten mit vorbestimmten, gespeicherten Authentisierungsdaten;
**dadurch gekennzeichent, daß**
die Authentitätsprüfeinrichtung (20) die Authentisierungsprüfung zentral für verschiedene Kommunikationsprotokolle durchführt, und daß
in einer Authentisierungsdatenbank (10) die Authentisierungsdaten für alle verwendeten Kommunikationsprotokolle zentral hinterlegt sind.

6. Netzelement nach Anspruch 5, **dadurch gekennzeichnet, daß** es weiterhin eine Verwaltungseinrichtung (30) umfaßt, welche die zentrale Authentisierungsdatenbank (10) verwaltet.

7. Netzelement nach Anspruch 6, **dadurch gekennzeichnet, daß** die Verwaltungseinrichtung (30) über eine eigene Agent Applikation (105) an das TMN angekoppelt ist und von dem TMN-OS gesteuert wird.

## Claims

1. Method for checking the authenticity of a manager application (50...100) in a telecommunications management network operating system TMN-OS by means of a network element which is managed by the TMN-OS via an intermediate TMN, having the following steps:
transmission of communication-protocol-specific authentication data from a manager application (50, 60...100) via the TMN to the network element in the course of handling a communication protocol, in which case the protocol-specific authentication data are required for the network element to check the authenticity of the manager application (50, 60...100); and
checking the authenticity of the manager application by comparison of the received protocol-specific authentication data with predetermined, stored authentication data;
**characterized in that**
the step of authentication checking is carried out centrally in an authenticity checking device (20) for various communication protocols; and **in that**
authentication data for all the communication protocols used are stored centrally in an authentication databank (10).

2. Method according to Claim 1, furthermore **characterized by** the following step:
management of the central authentication databank (10) by means of a dedicated communication protocol.

3. Method according to Claim 1 or 2, **characterized in that** the communication protocols are a Q3, FTAM, FTP or MML protocol.

4. Method according to one of Claims 1 to 3, **characterized in that** the step of authentication checking for each individual communication protocol is carried out centrally in the authenticity checking device (20) using different authentication types.

5. Network element in a telecommunications network, in which case the network element is managed by a telecommunications management network operating system TMN-OS via a telecommunications management network TMN, having:
at least one agent application (55, 65...105) for receiving communication-protocol-specific authentication data via the TMN from an associated manager application (50, 60...100) in the TMN-OS, in which case the authentication data are required for checking the authenticity of the associated manager application; and
an authenticity checking device (20), for receiving the protocol-specific authentication data from the agent application and for checking the authenticity of the management application by comparison of the protocol-specific authentication data with predetermined, stored authentication data;
**characterized in that**
the authenticity checking device (20) carries out the authentication checking centrally for various communication protocols, and **in that**
the authentication data for all the communication protocols used are stored centrally in an authentication databank (10).

6. Network element according to Claim 5, **characterized in that** said network element also has a management device (30) which manages the central authentication databank (10).

7. Network element according to Claim 6, **characterized in that** the management device (30) is coupled to the TMN via a dedicated agent application (105) and is controlled by the TMN-OS.

## Revendications

1. Procédé pour vérifier l'authenticité d'une application de gestion (50 ... 100) dans un système de commande de réseau de gestion de télécommunication TMN-OS par un élément réseau qui est géré par le TMN-OS par le biais d'un TMN intercalé, comprenant les étapes suivantes :
transmission de données d'authentification spécifiques à un protocole de communication d'une application de gestion (50, 60, ..., 100) à l'élément réseau par le biais du TMN dans le cadre du déroulement d'un protocole de communication, les données d'authentification spécifiques au protocole étant nécessaires pour la vérification de l'authenticité de l'application de gestion (50, 60, ..., 100) par l'élément réseau ; et
vérification de l'authenticité de l'application de gestion par comparaison des données d'authentification spécifiques au protocole reçues avec des données d'authentification enregistrées prédéterminées ;
**caractérisé en ce que**
l'étape de la vérification d'authentification se déroule de manière centrale dans un dispositif de vérification d'authenticité (20) pour différents protocoles de communication ; et **en ce que**
des données d'authentification pour tous les protocoles de communication utilisés sont enregistrées de manière centrale dans une base de données d'authentification (10).

2. Procédé selon la revendication 1, **caractérisé, en outre, par** l'étape suivante :
gestion de la base de données d'authentification centrale (10) par un protocole de communication propre.

3. Procédé selon la revendication 1 ou 2, **caractérisé en ce que** les protocoles de communication sont un protocole Q3, un protocole FTAM, un protocole FTP ou un protocole MML.

4. Procédé selon l'une des revendications 1 à 3, **caractérisé en ce que** l'étape de la vérification d'authentification se déroule de manière centrale dans le dispositif de vérification d'authenticité (20), pour chaque protocole de communication individuel, avec différents modes d'authentification.

5. Elément réseau dans un réseau de télécommunication, l'élément réseau étant géré par un système de commande de réseau de gestion de télécommunication TMN-OS par le biais d'un réseau de gestion de télécommunication TMN, avec :
au moins une application agent (55, 65, ..., 105) pour la réception, par le biais du TMN, de données d'authentification spécifiques aux protocoles de communication de la part d'une application de gestion correspondante (50, 60, ..., 100) dans le TMN-OS, les données d'authentification étant nécessaires pour la vérification de l'authenticité de l'application de gestion correspondante ; et
un dispositif de vérification d'authenticité (20) pour la réception des données d'authentification spécifiques aux protocoles de la part de l'application agent et pour la vérification de l'authenticité de l'application de gestion par comparaison des données d'authentification spécifiques aux protocoles avec des données d'authentification enregistrées prédéterminées ;
**caractérisé en ce que**
le dispositif de vérification d'authenticité (20) exécute la vérification d'authentification de manière centrale pour différents protocoles de communication, et **en ce que**
les données d'authentification pour tous les protocoles de communication utilisés sont enregistrées de manière centrale dans une base de données d'authentification (10).

6. Elément réseau selon la revendication 5, **caractérisé en ce qu'**il comprend, en outre, un dispositif de gestion (30) qui gère la base de données d'authentification centrale (10).

7. Elément réseau selon la revendication 6, **caractérisé en ce que** le dispositif de gestion (30) est couplé au TMN par le biais de sa propre application agent (105) et est commandé par le TMN-OS.
